# EUROPEAN PATENT SPECIFICATION

(11) **EP 3 255 347 B1**
(45) Date of publication and mention of the grant of the patent: **29.07.2020**
(21) Application number: 16173248.2
(22) Date of filing: 07.06.2016
(51) Int. Cl.: F24C 7/08, A23L 5/10

(54) **OVEN WITH PRE-HEATING UNIT FOR PRE-HEATING OF A COOKING CHAMBER**
OFEN MIT VORWÄRMEINHEIT ZUM VORWÄRMEN EINES KOCHRAUMS
FOUR AVEC UNITÉ DE PRÉCHAUFFAGE POUR PRÉCHAUFFER UNE CHAMBRE DE CUISSON

(43) Date of publication of application: 13.12.2017
(73) Proprietor: Vestel Elektronik Sanayi ve Ticaret A.S., 45030 Manisa (TR)
(72) Inventor: Özen, Erol, 45030 Manisa (TR); Dalkilic, Sercan, 45030 Manisa (TR)
(74) Representative: Ascherl, Andreas

(56) References cited:
- US-A- 2 339 974
- US-A- 3 428 783
- US-A- 5 505 975
- US-A1- 2012 199 571

## Description

The present invention refers to an oven according to claim 1 and a method for operating an oven according to claim 9.

### Background of the Invention

Generally pre-heating is needed in normal or turbo fan ovens. For example, users pre-heat the oven to 250°C before cooking starts. It took time and also causes injuring risks when oven lid is open when it is heated.

Document US20050066959A1 discloses a steam oven having a steam distributing unit which is installed in the steam oven and evenly distributes steam generated by a steam generator into a cooking cavity, which is defined in a cabinet of the steam oven. The steam oven has the steam generator, the cooking cavity, a steam feed pipe to feed the steam generated by the steam generator into the cooking cavity, and a steam distributing pipe to distribute the steam from the steam feed pipe into the cooking cavity. The steam oven additionally has a sectional area control part provided in the steam feed pipe, to control a flow speed of the steam in the steam feed pipe. Thus, US20050066959A1 does only disclose an oven that enables a special treatment (steam cooking) during the cooking process but no means for pre-heating a cooking chamber. Adding steam to the cooking chamber during pre-heating is also not beneficial since water has a very high heat capacity and thus takes a long time to heat up to a desired temperature. Further, since due to the high heat capacity of water, opening the oven for inserting food is very dangerous, in particular in case the water is already transformed to steam.

Document US20140238382A1 discloses an oven appliance. That oven appliance comprises a cooking chamber and a heating assembly. The heating assembly comprises an evaporator, a reactor in thermal communication with said cooking chamber and in fluid communication with said evaporator, a phase change fluid contained within said evaporator, said reactor, or both, a reaction substance located within said reactor and configured for dissolving in the phase change fluid when present in the reactor. Furthermore, a valve is provided, wherein the valve is in fluid communication with said evaporator and said reactor, said valve is selectively positionable between an open position and a closed position whereby the flow of phase change fluid between said reactor and said evaporator may be selectively controlled. This device has multiple drawbacks, e.g. a phase change material must be provided which is expensive, has a limited life time and can be toxic. Further prior art is disclosed by documents US2012/199571A1, US5505975A, US3428783A and US2339974A. Document US2012/199571A1 discloses a pressurized oven apparatus having a compressor and a pressurized chamber for rapidly preparing food products and retaining internal moisture therein. The apparatus comprises an oven with a pin-locking door and sealing means, an internal chamber having heating elements and a structure designed to withstand elevated internal pressures. Ambient air is drawn into the device through an air filter by an air compressor means. The compressor elevates the air pressure as it enters, whereby it flows to a preheating chamber, raising its temperature prior to being forced into the oven internal chamber. An automated relief valve system allows a consistent pressure to be maintained within the chamber, allowing the pressurized air to be evacuated therefrom through an insulated and muffled outlet. The air outlet of the device is preferably connected to an insulated air line to vent air to the exterior of a building or residence.

Document US5505975A discloses that meat such as poultry may be rapidly cooked in a closed and sealed pressure vessel subjected to a mixture of superheated steam and superatmospheric compressed air at a temperature of least 400 DEG F. and at an internal chamber pressure of at least 15 psig fed from an air compressor through a heat exchanger. According to US5505975A water is mixed with the heated superatmospheric compressed air such that a mixture of superheated steam and superatmospheric compressed air is created prior to mixture entry into the interior of the pressure vessel. According to US5505975A meat is cooked rapidly at a temperature within the chamber in the range of 400 DEG F. to 600 DEG F. and at pressures ranging from 15 to 150 psig. A pressure relief valve coupled to the pressure vessel exhausts the mixture of superheated steam and superatmospheric compressed air to maintain the desired gas pressurization within the chamber.

Document US3428783A discloses a pressure cooking apparatus having a sealed oven, a hot air pressure chamber and conduit with a valve connecting said pressure chamber with said oven for providing said oven with hot air under pressure. A motor driven compressor for supplying air under pressure to the pressure chamber and an electric heater in said pressure chamber for heating said air.

Document US2339974A discloses a method of cooking food which comprises confining food materials in an oven, introducing and maintaining compressed air in the oven and surrounding the food with sources of radiant heat to radiate directly upon the food material, said radiant heat being supplied independently of the compressed air.

### Object of the Invention

It is an object of the present invention to provide an oven that heats up quickly and without causing danger for the users. According to a further preferred object the oven should be reliable and inexpensive.

### Description of the Invention

The before mentioned object is solved by an oven according to claim 1. The inventive oven preferably comprises at least a cooking chamber for heating food and a pre-heating unit for providing heated air for heating the cooking chamber, wherein the air can be heated inside a pre-heating chamber of the pre-heating unit, wherein an air supply is preferably provided for conducting ambient air under pressure into the pre-heating chamber of the pre-heating unit for providing pressurized air inside the pre-heating chamber, wherein the cooking chamber and the pre-heating chamber are preferably fluidly connected and wherein air pre-heated in the pre-heating chamber is preferably conductable by means of the fluid connection from the pre-heating chamber to the cooking chamber.

This solution is beneficial since the pre-heating can be carried out in a safe, quick and reliable manner.

According to the present invention two separate areas respectively chambers are formed. One of them is used for pre-heating and the other one is used for cooking. The pre-heating area respectively chamber preferably has a pressure resistant and is particular preferably heat isolated. Air will be compressed in the pre-heating chamber. This chamber can be heated by pressure resistant and or electric resistant. Heating by means of pressure resistance preferably means the emission of heat due the compression of air.

Thus, the pre-heating area is filled with pressured air. Air is heated in the pre-heating chamber above a predefined temperature respectively to a predefined temperature by a resistance. The pre-heated respectively heated air can be released automatically or due to a releasing event, like a sensor value or a user interaction. Thus, the pressured air is then released from pre-heating area to the normal cooking area respectively the cooking chamber. After expansion of heated-pressured air the cooking area can reach to the set respectively desired temperature in short time. This invention can be used in special modes (like fast cooking) if it is need.

The pressure and/or temperature inside the pre-heating chamber preferably can be predefined or set or modified.

Advantageous embodiments may be configured according to any claim and/or the following specification parts.

According to a preferred embodiment of the present invention the pre-heating area comprises a heat isolating section for limiting heat transfer by means of heat conduction or heat radiation to the cooking chamber or the outside of the oven. The material used for thermal isolation preferably has a thermal conductivity of less than 1W/(m^{∗}K), in particular of less than 0,5 W/(m^{∗}K) or less than 0,1 W/(m^{∗}K) or less than 0,05 W/(m^{∗}K) or less than 0,01 W/(m^{∗}K).

The volume of the pre-heating chamber is according to a further preferred embodiment of the present invention about 5%-20% of the volume, in particular about 8%-15% or about 10% or exactly 10% of the volume of the cooking chamber. The volume is defined herein by the amount respectively the maximum weight of air that can be received under ambient pressure. Preferably can be the weight of the pressurized air inside the pre-heating chamber higher than the weight of the air in the cooking chamber while the air in the cooking chamber is under ambient pressure. Ambient pressure preferably has to be understood as 1bar.

When a pre-heat mode is activated air intake, in particular of ambient air, takes place. The air is pressurised in a small area (total oven area when expanded) and the air is heated in that area. Because there is no thermal connection between the normal oven area and the heated area the oven according to the present invention is completely safe. When the system is activated the heated air is expanded to the oven area.

At least one valve means is provided according to a further preferred embodiment of the present invention, wherein due to the valve means airflow through the conducting means can be prevented or enabled. This embodiment is beneficial since the valve means can be connected with the sensor means and/or the control means. Thus, the valve means can be triggered in response of an event caused by the sensor means and/or the user. The control means is hereby preferably designed as a knob or a touch screen for inserting commands by the user. Thus valve means is preferably coupled with one or more sensors means and/or control means, wherein the sensor means detects if an oven lid is opened or closed and/or if a predefined pressure within the pre-heating chamber is reached and/or if the pressurized air within the pre-heating chamber has a predefined temperature.

According to a further preferred embodiment of the present invention the pre-heating unit comprises at least one heating unit, wherein the operation of the heating unit can be triggered by means of the control means or by means of the sensor means. Additionally, or alternatively the heating unit can comprise at least one resistance element for transforming electric energy into heat. The electric heating element can preferably be operated with more than 50 watts, in particular with more than 100 watts or with more than 200 watts or with more than 500 watts or with more than 1000 watts or with more than1500 watts or with more than 2000 watts.

The pre-heating unit comprises according to a further preferred embodiment of the present invention at least one compressor means for supplying air to the pre-heating chamber and for subjecting the air within the pre-heating chamber to a pressure above ambient pressure, in particular above 1,5bar or above 2bar or above 2,5bar. This embodiment is beneficial since due to the compressed air a large amount of air can be quickly heated with a relatively small heating unit, compared with the main heating unit of the oven. The main heating unit of the oven preferably can heat the cooking chamber to a temperature above 220°C, in particular to a temperature above 250°C or to a temperature above 300°C. The main heating unit is preferably operated by means of electricity, in particular preferably comprises an electric resistance element.

The before mentioned object of the present invention is also solved by a method for operating an oven according to claim 9 of the present invention. The method preferably comprises at least the steps: Providing an oven according to any of the preceding claims; Selecting one of several programs, wherein at least the selected program causes an operation of the pre-heating unit, wherein the pre-heating unit compresses and heats air in the pre-heating chamber and enabling air flow from the pre-heating chamber to the cooking chamber, wherein the compressed air is expanded during that air flow. Air flow is preferably enabled due to a predefined event, in particular a signal from the sensor means or an actuation caused by the control means. The pre-heating unit, in particular the compressor means and/or the heating means, is automatically switched off after a predetermined number of repetitions have been carried out or a predefined temperature has been reached within the cooking chamber. As an alternative the pre-heating unit is only operated one time per heating of the cooking chamber. This preferably describes, that the pre-heating chamber preferably does not heat up or release any further air to the cooking chamber as long as the temperature within the cooking chamber is above a predefined threshold.

Further benefits, goals and features of the present invention will be described by the following specification of the attached figures, in which exemplarily components of the invention are illustrated. Components of the devices and methods according to the inventions, which match at least essentially with respect to their function can be marked with the same reference sign, wherein such components do not have to be marked or described in all figures.

In the following the invention is just exemplarily described with respect to the attached figures.

### Brief Description of the Drawings

- Fig. 1: shows an exemplary schematic illustration of an oven according to the present invention;
- Fig. 2: shows an exemplary schematic illustration of a pre-heating unit of an oven according to the present invention; and
- Fig. 3a-3b: show multiple exemplary schematic illustrations of the fluid connection between the pre-heating chamber and the cooking chamber.

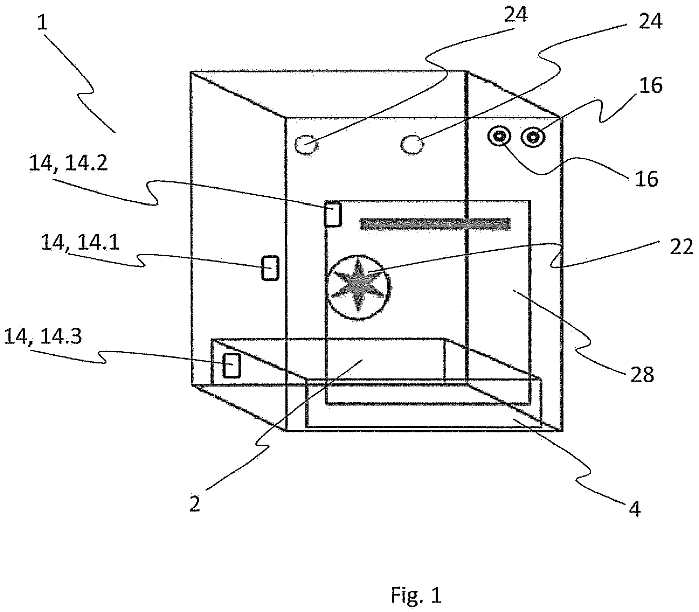

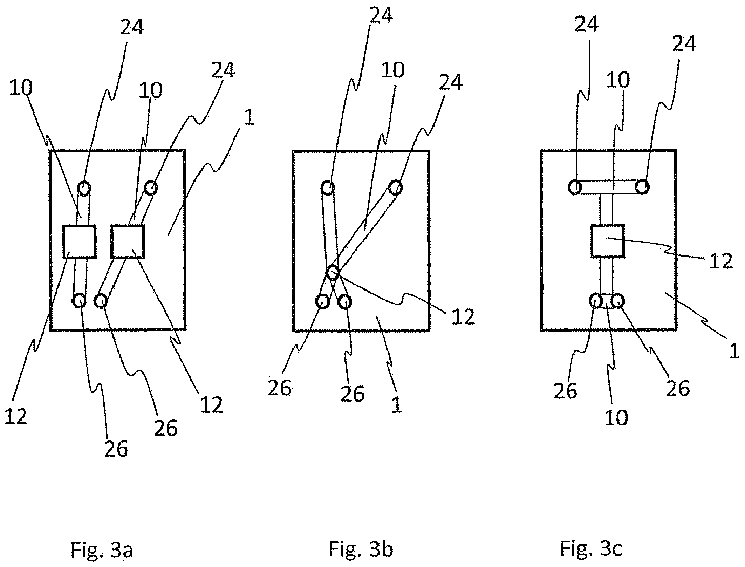

Fig. 1 shows a schematic illustration of an oven 1 according to the present invention. The oven 1 comprises a cooking chamber 2, wherein the cooking chamber 2 is configured to receive food. The oven further comprises an oven lid 28. The oven lid 28 enables an opening and closing of the cooking chamber 2. The oven lid 28 preferably comprises a window, wherein that window enables an user to look into the cooking chamber 2 with closed oven lid 28. The cooking chamber 2 is further connected to a main heating unit 22. The main heating unit 22 is preferably controlled by control means 16. Control means 16 can be designed as knobs or as touch screen or the like. Furthermore, outlets 24 are shown. Outlets 24 are arranged to enable an air flow from a pre-heating chamber 6 of the pre-heating unit 4 through a conducting means 10 (cf. fig. 3) respectively through multiple conducting means respectively fluid connections to the cooking chamber 2. According to the embodiment of fig. 1, only two outlets 24 are shown but also more or less than two openings 24 are possible. Preferably exactly one or more than 2 or 4, or 5 or 6 or 7 or 10 or 20 openings 24 are possible. Multiple openings are preferably connected to the same fluid connection. It is alternatively also possible that only 1 or 2 or 3 or 4 or 5 openings 24 are connected to one fluid connection 10, in particular pipe. Reference number 14 respectively reference numbers 14.1-14.3, indicate optional sensor means. Wherein one, multiple or none of said sensor means 14 can be provided. Sensor means 14.1 is preferably a sensor means for sensing a contact, in particular for sensing if oven 1 is closed by oven lid 28 or not. Sensor means 14.2 is preferably a sensor means for sensing the temperature inside the oven 1, in particular for sensing the temperature of a predefined wall part of the oven 1 or of the temperature of the air inside the oven, in particular in a predefined section of the oven 1. Sensor means 14.3 is preferably a temperature and/or pressure sensor that senses the pressure and/or temperature of the compressed and heated air inside the pre-heating chamber 6 of the pre-heating unit 4.

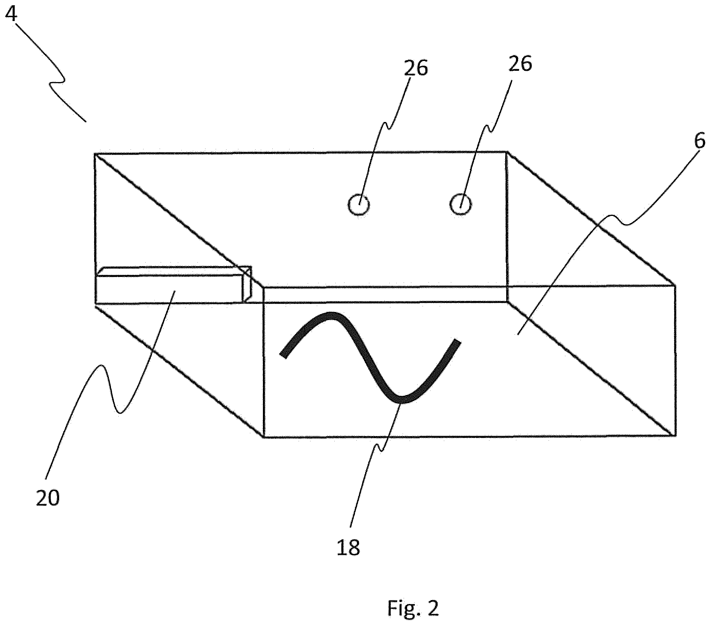

Fig. 2 shows a schematic example of a pre-heating unit 4. The pre-heating unit 4 forms a pre-heating chamber 6, in particularly by means of a solid structure or flexible structure, wherein that structure preferably comprises or consist at least sectional of isolation material.

Fig. 2 further shows a compressor means 20. In this example the compressor means 20 is arranged inside the pre-heating chamber 6 but it is also possible that the compressor means 20 is arranged outside or adjacent the pre-heating chamber 6. The compressor means 20 is preferably always in fluid connection with the pre-heating chamber 6, wherein a valve device (not shown) can be present for preventing air loss via the suction element or the compressor means 20. Reference number 18 preferably indicates a heating unit, preferably electrically operated. The heating unit 18 is preferably operateable in such a manner that the pressurized air inside the pre-heating chamber 6 can be heated to a temperature above 50°C or above 60°C or above 70°C or above 80°C or above 90°C or above 100°C or above 110°C or above 120°C or above 150°C or above 180°C or above 200°C. Additionally or alternatively the heating of the air can take place due to the compression of the air.

The openings 26 are outlet openings which are preferably fluidly coupled with one or more outlets 24 of the cooking chamber. It has to be understood that it is also possible to have less than 2, in particular exactly one opening 26 respectively outlet from the pre-heating chamber or exactly or more than two of such openings 26.

Fig. 3a-3c exemplarily show fluid connections 10 between the openings 26 and the outlets 24. According to fig. 3a each opening 26 is connected by means of an individual fluid connection 10, in particular a pipe, with one outlet 24. Each fluid connection 10 preferably comprises at least or exactly one valve means 12.

Fig. 3b and 3c show examples according to which all openings 26 and outlets 24 are connected to the same fluid connection means 10, wherein the common fluid connection means 10 preferably comprises a valve means 12.

It has to be understood that an operating unit might be provided that utilizes control commands and/or sensor signals or that combines control commands and sensor signals to control the compression means 20 and/or the heating unit 18 and/or the main heating unit 22 and/or one or more valve means.

Thus, the present invention refers to an oven 1. The oven 19 according to the present invention at least comprises a cooking chamber 2 for heating food, a pre-heating unit 4 for providing heated air for heating the cooking chamber 2, wherein the air can be heated inside a pre-heating chamber 6 of the pre-heating unit 4, wherein an air supply 8 is provided for conducting ambient air under pressure into the pre-heating chamber 6 of the pre-heating unit 4 for providing pressurized air inside the pre-heating chamber 6, wherein the cooking chamber 2 and the pre-heating chamber 6 are fluidly connected, wherein air pre-heated in the pre-heating chamber 6 is conductible by means of the fluid connection 10 from the pre-heating chamber 6 to the cooking chamber 2.

### List of reference numbers

- 1: Oven
- 2: cooking chamber
- 4: pre-heating unit
- 6: pre-heating chamber
- 8: air supply
- 10: fluid connection
- 12: valve means
- 14: sensor means
- 14.1: temperature sensor
- 14.2: contact sensor
- 14.3: temperature and/or pressure sensor
- 16: control means
- 18: heating unit
- 20: compressor means
- 22: main heating unit
- 24: outlet to the cooking chamber
- 26: outlet from the pre-heating chamber
- 28: oven lid

## Claims

1. Oven (1),
at least comprising
a cooking chamber (2) for heating food,
a pre-heating unit (4) for providing heated air for heating the cooking chamber (2), wherein the air can be heated inside a pre-heating chamber (6) of the pre-heating unit (4),
wherein an air supply (8) is provided for conducting ambient air under pressure into the pre-heating chamber (6) of the pre-heating unit (4) for providing pressurized air inside the pre-heating chamber (6),
wherein the cooking chamber (2) and the pre-heating chamber (6) are fluidly connected,
wherein air pre-heated in the pre-heating chamber (6) is conductable by means of a fluid connection (10) from the pre-heating chamber (6) to the cooking chamber (2),
wherein at least one valve means (12) is provided, wherein due to the valve means (12) airflow through the fluid connection (10) can be prevented or enabled,
wherein
the valve means (12) is coupled with one or more sensor means (14), wherein the sensor means (14) detects
if a predefined pressure within the pre-heating chamber (6) is reached,
and/or
if the pressurized air within the pre-heating chamber (6) has a predefined temperature **characterized in that**
the compressed air is expanded during that airflow through the fluid connection (10) from a pressure above 1,5 bar to ambient pressure in the cooking chamber (2).

2. Oven according to claim 1,
**characterized in that**
the pre-heating chamber (6) comprises a heat isolating section for limiting heat transfer by means of heat conduction or heat radiation to the cooking chamber (2) or the outside of the oven (1).

3. Oven according to claim 1 or claim 2,
**characterized in that**
the volume of the pre-heating chamber (6) is about 5%-20% of the volume of the cooking chamber (2), wherein the weight of the pressurized air inside the pre-heating chamber (6) can be higher than the weight of the air in the cooking chamber (2).

4. Oven according to any of the preceding claims,
**characterized in that**
the sensor means (14) detects if an oven lid is opened or closed.

5. Oven according to any of the preceding claims,
**characterized in that**
the valve means (12) is coupled with one or more control means (16).

6. Oven according to any of the preceding claims,
**characterized in that**
the pre-heating unit (4) comprises at least one heating unit (18),
wherein the operation of the heating unit (18) can be triggered by means of the control means (16) or by means of the sensor means (14),
wherein the heating unit (18) comprises at least one resistance element (20) for transforming electric energy into heat.

7. Oven according to any of the preceding claims,
**characterized in that**
the pre-heating unit (18) comprises at least one compressor means (20) for supplying air to the pre-heating chamber (6) and for subjecting the air within the pre-heating chamber (6) with a pressure above ambient pressure, in particular above 1,5 bar or above 2 bar or above 2,5 bar.

8. Oven according to any of the preceding claims,
**characterized in that**
a main heating unit (22) for heating the cooking chamber (2) is provided.

9. Method for operating an oven at least comprising the steps:
Providing an oven (1) according to any of the preceding claims;
Selecting one of several programs, wherein at least the selected program causes an operation of the pre-heating unit (4), wherein the pre-heating unit (4) compresses and heats air in the pre-heating chamber (6);
Enabling air flow from the pre-heating chamber (6) to the cooking chamber (2), wherein the compressed air is expanded during that air flow from a pressure above 1,5 bar to ambient pressure in the cooking chamber (2).

10. Method according to claim 9,
**characterized in that**
air flow is enabled due to a predefined event, in particular a signal from the sensor means (14) or an actuation caused by the control means (16).

11. Method according to claim 9 or 10,
**characterized in that**
the pre-heating unit (4), in particular the compressor means (16) and/or the heating unit (18), is automatically switched off after
a predetermined number of repetitions have been carried out or
a predefined temperature has been reached within the cooking chamber (2).

12. Method according to claim 9 or 10,
**characterized in that**
the pre-heating unit (4) can be only one time operated per heating of the cooking chamber.

## Patentansprüche

1. Ofen (1),
mindestens aufweisend
eine Kochkammer (2) zum Erhitzen von Lebensmitteln,
eine Vorheizeinheit (4) zum Bereitstellen von erwärmter Luft zum Erhitzen der Kochkammer (2),
wobei die Luft innerhalb einer Vorheizkammer der Vorheizeinheit (4) erwärmt werden kann,
wobei eine Luftzufuhr (8) zum Leiten von unter Druck stehender Umgebungsluft in die Vorheizkammer (6) der Vorheizeinheit (4) zum Bereitstellen von druckbeaufschlagter Luft in der Vorheizkammer vorgesehen ist,
wobei die Kochkammer (2) und die Vorheizkammer (6) fluidisch verbunden sind,
wobei Luft, die in der Vorheizkammer (6) vorgewärmt ist, mittels einer Fluidverbindung (10) von der Vorheizkammer (6) zur Kochkammer (2) leitbar ist
wobei mindestens ein Ventilmittel (12) vorgesehen ist, wobei aufgrund des Ventilmittels (12) ein Luftfluss durch das die Fluidverbindung (10) verhindert oder ermöglicht werden kann,
wobei das Ventilmittel (12) mit einem oder mehreren Sensormitteln (14) gekoppelt ist, wobei das Sensormittel (14) detektiert, ob ein vordefinierter Druck in der Vorheizkammer (6) erreicht ist und/oder ob die druckbeaufschlagte Luft in der Vorheizkammer (6) eine vordefinierte Temperatur hat,
**dadurch gekennzeichnet, dass**
wobei sich die druckbeaufschlagte Luft während des Luftflusses durch die Fluidverbindung (10) von einem Druck über 1,5 bar auf Umgebungsdruck in der Kochkammer (2) ausdehnt.

2. Ofen nach Anspruch 1,
**dadurch gekennzeichnet, dass**
die Vorheizkammer (6) einen Wärmeisolationsabschnitt zur Begrenzung der Wärmeübertragung mittels Wärmeleitung oder Wärmestrahlung zur Kochkammer (2) oder zur Außenseite des Ofens (1) aufweist.

3. Ofen nach Anspruch 1 oder Anspruch 2,
**dadurch gekennzeichnet, dass**
das Volumen der Vorheizkammer (6) etwa 5 bis 20% des Volumens der Kochkammer (2) beträgt,
wobei das Gewicht der druckbeaufschlagten Luft innerhalb der Vorheizkammer (6) höher sein kann als das Gewicht der Luft in der Kochkammer (2).

4. Ofen nach einem der vorhergehenden Ansprüche,
**dadurch gekennzeichnet, dass**
Sensormittel (14) erfasst, ob ein Ofendeckel geöffnet oder geschlossen ist.

5. Ofen nach einem der vorhergehenden Ansprüche,
**dadurch gekennzeichnet, dass**
das Ventilmittel (12) mit einem oder mehreren Steuermitteln (16) gekoppelt ist.

6. Ofen nach einem der vorhergehenden Ansprüche,
**dadurch gekennzeichnet, dass**
die Vorheizeinheit (4) mindestens eine Heizeinheit (18) aufweist,
wobei der Betrieb der Heizeinheit (18) mittels der Steuermittel (18) oder mittels der Sensormittel (14) ausgelöst werden kann (16),
wobei die Heizeinheit (18) mindestens ein Widerstandselement (20) zum Umwandeln von elektrischer Energie in Wärme aufweist.

7. Ofen nach einem der vorhergehenden Ansprüche,
**dadurch gekennzeichnet, dass**
die Vorheizeinheit (18) mindestens eine Kompressoreinrichtung (20) zum Zuführen von Luft zur Vorheizkammer (6) und zum Beaufschlagen der Luft in der Vorheizkammer (6) mit einem Druck über Umgebungsdruck, insbesondere über 1,5 bar oder über 2 bar oder über 2,5 bar, aufweist.

8. Ofen nach einem der vorhergehenden Ansprüche,
**dadurch gekennzeichnet, dass**
eine Hauptheizeinheit (22) zum Heizen der Kochkammer (2) vorgesehen ist.

9. Verfahren zum Betreiben eines Ofens, mindestens aufweisend die folgenden Schritte:
Bereitstellen eines Ofens (1) gemäß einem der vorhergehenden Ansprüche;
Auswählen eines von mehreren Programmen, wobei zumindest das ausgewählte Programm einen Betrieb der Vorheizeinheit (4) bewirkt, wobei die Vorheizeinheit (4) Luft in der Vorheizkammer (6) komprimiert und erwärmt;
Ermöglichen des Luftflusses von der Vorheizkammer (6) zur Kochkammer (2), wobei sich die Druckluft während dieses Luftflusses von einem Druck über 1,5 bar auf Umgebungsdruck in der Kochkammer ausdehnt.

10. Verfahren nach Anspruch 9,
**dadurch gekennzeichnet, dass**
der Luftfluss aufgrund eines vordefinierten Ereignisses, insbesondere eines Signals vom Sensormittel (14) oder einer durch das Steuermittel (16) verursachten Betätigung, ermöglicht wird.

11. Verfahren nach Anspruch 9 oder 10,
**dadurch gekennzeichnet, dass**
die Vorheizeinheit (4), insbesondere die Kompressoreinrichtung (16) und/oder die Heizeinheit (18) automatisch abgeschaltet wird nachdem eine vorbestimmte Anzahl von Wiederholungen oder nachdem eine vordefinierte Temperatur in der Kochkammer (2) erreicht wurde.

12. Verfahren nach Anspruch 9 oder 10,
**dadurch gekennzeichnet, dass**
die Vorheizeinheit (4) nur einmal pro Aufheizung der Kochkammer betrieben werden kann.

## Revendications

1. Four (1),
ayant au moins
une chambre de cuisson (2) pour chauffer les aliments,
une unité de préchauffage (4) pour fournir de l'air chauffé afin de chauffer la chambre de cuisson (2),
par lequel l'air peut être chauffé à l'intérieur d'une chambre de préchauffage de l'unité de préchauffage (4),
dans lequel une alimentation en air (8) pour conduire l'air ambiant sous pression dans la chambre de préchauffage (6) de l'unité de préchauffage (4) est prévue pour fournir de l'air sous pression dans la chambre de préchauffage,
dans lequel la chambre de cuisson (2) et la chambre de préchauffage (6) sont en liaison fluidique,
où l'air préchauffé dans la chambre de préchauffage (6) peut être conduit de la chambre de préchauffage (6) à la chambre de cuisson (2) au moyen d'un raccord de fluide (10)
dans laquelle au moins un moyen de soupape (12) est prévu, dans laquelle, grâce au moyen de soupape (12), un flux d'air à travers lequel la connexion de fluide (10) peut être empêchée ou activée,
dans lequel ledit moyen de soupape (12) est couplé à un ou plusieurs moyens de capteur (14), ledit moyen de capteur (14) détectant si une pression prédéfinie dans ladite chambre de préchauffage (6) est atteinte et/ou si l'air pressurisé dans ladite chambre de préchauffage (6) a une température prédéfinie,
**caractérisé en ce que**
dans lequel l'air sous pression se détend pendant la circulation de l'air à travers le raccord de fluide (10), passant d'une pression supérieure à 1,5 bar à la pression ambiante dans la chambre de cuisson (2).

2. Four selon la revendication 1,
**caractérisé en ce que**
la chambre de préchauffage (6) comporte une partie d'isolation thermique pour limiter le transfert de chaleur par conduction ou rayonnement thermique vers la chambre de cuisson (2) ou vers l'extérieur du four (1).

3. Four selon la revendication 1 ou la revendication 2,
**caractérisé en ce que**
le volume de la chambre de préchauffage (6) représente environ 5 à 20 % du volume de la chambre de cuisson (2),
dans lequel le poids de l'air sous pression à l'intérieur de la chambre de préchauffage (6) peut être supérieur au poids de l'air à l'intérieur de la chambre de cuisson (2).

4. Four selon l'une des revendications précédentes,
**caractérisé en ce que**
Le moyen de détection (14) détecte si le couvercle d'un four est ouvert ou fermé.

5. Four selon l'une des revendications précédentes,
**caractérisé en ce que**
le moyen de valve (12) est couplé à un ou plusieurs moyens de contrôle (16).

6. Four selon l'un des revendications précédents,
**caractérisé en ce que**
l'unité de préchauffage (4) comprend au moins une unité de chauffage (18),
où le fonctionnement de l'unité de chauffage (18) peut être déclenché (16) par le moyen de commande (18) ou par le moyen de détection (14),
dans lequel l'unité de chauffage (18) comprend au moins un élément résistif (20) pour convertir l'énergie électrique en chaleur.

7. Four selon l'une des revendications précédentes,
**caractérisé en ce que**
l'unité de préchauffage (18) comporte au moins un dispositif de compresseur (20) pour alimenter en air la chambre de préchauffage (6) et pour soumettre l'air de la chambre de préchauffage (6) à une pression supérieure à la pression ambiante, en particulier supérieure à 1,5 bar ou supérieure à 2 bars ou supérieure à 2,5 bars.

8. Four selon l'une des revendications précédentes,
**caractérisé en ce que**
une unité de chauffage principale (22) est prévue pour chauffer la chambre de cuisson (2).

9. Méthode de fonctionnement d'un four, comprenant au moins les étapes suivantes :
fournir un four (1) conformément à l'une des revendications précédentes ;
sélection d'un programme parmi plusieurs, au moins le programme sélectionné provoquant le fonctionnement de l'unité de préchauffage (4), dans lequel l'unité de préchauffage (4) comprime et chauffe l'air dans la chambre de préchauffage (6) ;
permettant à l'air de s'écouler de la chambre de préchauffage (6) vers la chambre de cuisson (2), dans lequel l'air comprimé se détend d'une pression supérieure à 1,5 bar à la pression ambiante dans la chambre de cuisson pendant ledit écoulement d'air.

10. Méthode selon la revendication 9,
**caractérisé en ce que**
le flux d'air est activé en réponse à un événement prédéfini, en particulier un signal provenant du moyen de détection (14) ou un actionnement provoqué par le moyen de commande (16).

11. Méthode selon la revendication 9 ou 10,
**caractérisé en ce que**
l'unité de préchauffage (4), en particulier le dispositif de compresseur (16) et/ou l'unité de chauffage (18) est automatiquement arrêtée après un nombre prédéterminé de répétitions ou après qu'une température prédéfinie a été atteinte dans la chambre de cuisson (2).

12. Méthode selon la revendication 9 ou 10,
**caractérisé en ce que**
l'unité de préchauffage (4) ne peut être utilisée qu'une seule fois par chauffage de la chambre de cuisson.
